# EUROPÄISCHE PATENTANMELDUNG

(11) **EP 4 660 577 A1**
(43) Veröffentlichungstag der Anmeldung: **10.12.2025**
(21) Anmeldenummer: 25180373.0
(22) Anmeldetag: 03.06.2025
(51) Int. Cl.: G01C 9/28, A47G 1/20, A47G 1/24

(54) **VORRICHTUNG UND VERFAHREN ZUM AUSRICHTEN EINES GEGENSTANDS**

(30) Priorität: 06.06.2024 DE 102024115791
(71) Anmelder: IMS-Verbindungstechnik GmbH & Co. KG, 74632 Neuenstein (DE)
(72) Erfinder: ILZHÖFER, Leberecht, 74632 Neuenstein (DE); GLASER, Vitali, 74239 Hardthausen (DE)
(74) Vertreter: Patentanwälte Ruff, Wilhelm, Beier, Dauster & Partner mbB

(57) **Zusammenfassung**

Die Erfindung betrifft eine Vorrichtung zum Ausrichten eines Gegenstands, insbesondere eines Bilds, an einer Wand, wobei die Vorrichtung eine Wasserwaagenhalterung zum Fixieren einer Wasserwaage, so dass eine Oberseite der Wasserwaage zum Auflegen des Gegenstands vollständig freiliegt, und eine in der Länge verstellbare Abstützung für die Wasserwaagenhalterung aufweist, wobei die Abstützung zum Abstützen der Wasserwaagenhalterung auf einer Bodenfläche ausgebildet ist.

## Beschreibung

Die Erfindung betrifft eine Vorrichtung zum Ausrichten eines Gegenstands, insbesondere eines Bilds, an einer Wand. Die Erfindung betrifft auch ein Verfahren zum Ausrichten eines Gegenstands, insbesondere eines Bilds, an einer Wand.

Das Ausrichten von Gegenständen an einer Wand, beispielsweise beim Aufhängen von Bildern, ist für eine Person alleine schwer zu bewältigen. Der Gegenstand, insbesondere das Bild, muss an die Wand gehalten werden, dann muss die Lage der Befestigungen, insbesondere Haken, angezeichnet werden und gleichzeitig muss nach Gefühl oder mit einer Wasserwaage die horizontale und/oder senkrechte Ausrichtung des Gegenstands überprüft werden. Mit zwei Personen ist es dahingegen problemlos möglich, einen Gegenstand an einer Wand auszurichten und aufzuhängen. Beispielsweise hält eine Person den Gegenstand, insbesondere ein Bild, einen Bildschirm oder ein Tablet, und die andere Person kann die Lage von Haken anzeichnen und gegebenenfalls auch Bohrungen setzen.

Mit der Erfindung soll das Ausrichten von Gegenständen an einer Wand erleichtert werden.

Erfindungsgemäß ist hierzu eine Vorrichtung mit den Merkmalen von Anspruch 1 bzw. ein Verfahren mit den Merkmalen von Anspruch 12 vorgesehen. Vorteilhafte Weiterbildungen der Erfindung sind in den jeweiligen Unteransprüchen angegeben.

Bei einer erfindungsgemäßen Vorrichtung zum Ausrichten eines Gegenstands, insbesondere eines Bilds, an einer Wand sind eine Wasserwaagenhalterung zum Fixieren einer Wasserwaage, so dass eine Oberseite der Wasserwaage zum Auflegen des Gegenstands vollständig freiliegt, sowie eine in der Länge verstellbare Abstützung für die Wasserwaagenhalterung vorgesehen, wobei die Abstützung zum Abstützen der Wasserwaagenhalterung auf einer Bodenfläche ausgebildet ist.

Mit der erfindungsgemäßen Vorrichtung kann auch nur eine Person problemlos einen Gegenstand, insbesondere ein Bild, an einer Wand ausrichten. Die Wasserwaage wird in die Wasserwaagenhalterung eingesetzt, wobei eine Oberseite der Wasserwaage zum Auflegen des Gegenstands, insbesondere des Bilds, vollständig freiliegt. Die Wasserwaagenhalterung wird mit einer in der Länge verstellbaren Abstützung verbunden und die Abstützung wird mit ihrem, der Wasserwaagenhalterung gegenüberliegenden Ende auf einer Bodenfläche abgestützt. Der Gegenstand kann nun auf die Oberseite der Wasserwaage aufgesetzt werden und wird dann mittels der Wasserwaage, der Wasserwaagenhalterung und der Abstützung zur Bodenfläche hin abgestützt. Ein Bediener kann nun den auf der Oberseite der Wasserwaage aufliegenden Gegenstand so ausrichten, dass eine Unterkante des Gegenstands exakt horizontal ist. Hierzu benutzt der Bediener die Libelle der Wasserwaage und verschwenkt lediglich den Gegenstand zusammen mit der Abstützung, der Wasserwaagenhalterung und der Wasserwaage an der Wand. Mit einer Hand kann er den Gegenstand, falls gewünscht, auf der Oberseite der Wasserwaage verschieben oder die Höhe der Abstützung justieren. In der gewünschten Position kann er den Gegenstand in seiner Lage fixieren, indem er ihn mit einer Hand einfach gegen die Wand drückt. Mit der anderen Hand kann er Markierungen an der Wand anbringen, gegebenenfalls gleich Bohrungen in die Wand einbringen oder Nägel in die Wand einschlagen. Die Erfindung ermöglicht es dadurch, Gegenstände, insbesondere Bilder, problemlos und durch lediglich einen einzigen Bediener in einer präzisen, vordefinierten Höhe und exakt horizontal ausgerichtet an einer Wand auszurichten und dann gegebenenfalls an der Wand zu befestigen.

In Weiterbildung der Erfindung ist die Abstützung als Teleskopstange ausgebildet.

Beispielsweise kann eine handelsübliche Teleskop-Verlängerungsstange eingesetzt werden, die im Malerbedarf üblich ist und die dazu verwendet wird, eine Walze aufzusetzen, um beispielsweise eine Deckenfläche oder eine sehr hohe Wandfläche mit Farbe zu versehen. Äußerst vorteilhaft ist dabei, dass solche Teleskopstangen problemlos verfügbar sind und, wie Wasserwaagen, zur üblichen Ausstattung eines Handwerkers oder Heimwerkers gehören.

In Weiterbildung der Erfindung hat die Wasserwaagenhalterung eine rohrförmige Aufnahme zum Aufnehmen eines Endes der Abstützung und die Abstützung weist ein zapfenartiges Ende zum Einstecken in die rohrförmige Aufnahme auf.

Auf diese Weise lässt sich die Abstützung in sehr einfacher und spielfreier Weise mit der Wasserwaagenhalterung verbinden. Die Schnittstelle zwischen der Abstützung und der Wasserwaagenhalterung stellt dabei eine gewöhnliche, handelsübliche Schnittstelle dar und ist insbesondere für handelsübliche Teleskop-Verlängerungsstangen ausgebildet. Beispielsweise kann das zapfenartige Ende der Abstützung leicht konisch sein und mit in Längsrichtung verlaufenden Nuten versehen sein. Die rohrförmige Aufnahme der Wasserwaagenhalterung ist in diesem Fall ebenfalls leicht konisch ausgebildet und weist in Längsrichtung verlaufende leistenartige Vorsprünge auf, die zu den Nuten des zapfenartigen Endes der Abstützung passen. Auf diese Weise kann das zapfenartige Ende in sehr einfacher Weise in die rohrförmige Aufnahme der Wasserwaagenhalterung gesteckt werden, sitzt dann spielfrei in der rohrförmigen Aufnahme und ist gleichzeitig drehfest in der rohrförmigen Aufnahme angeordnet. Dennoch können die Abstützung und die Wasserwaagenhalterung sehr leicht wieder durch einfaches Herausziehen voneinander getrennt werden. Im Rahmen der Erfindung kann die rohrförmige Aufnahme auch ein Innengewinde und das zapfenartige Ende ein Außengewinde aufweisen. Die Gewinde können sich verjüngend und damit konisch ausgebildet sein.

In Weiterbildung der Erfindung weist die Wasserwaagenhalterung wenigstens einen Rastarm auf.

Mittels eines Rastarms, insbesondere zum abschnittsweisen Umgreifen der Wasserwaage, kann eine Wasserwaage sicher an der Wasserwaagenhalterung fixiert werden und dennoch leicht lösbar an der Wasserwaagenhalterung befestigt sein. Vorteilhafterweise übt der Rastarm eine leichte Klemmkraft auf die Wasserwaage aus, so dass die Wasserwaage nach Einrasten des Rastarms spielfrei an der Wasserwaagenhalterung gehalten ist.

In Weiterbildung der Erfindung weist der Rastarm an seinem freien Ende wenigstens eine Rastnase auf, die im montierten Zustand der Wasserwaage auf der Oberseite einer Libelle der Wasserwaage zu liegen kommt.

In sehr einfacher Weise kann die Wasserwaage dadurch spielfrei und sicher an der Wasserwaagenhalterung fixiert werden und gleichzeitig bleibt die Oberseite der Wasserwaage frei, da die Oberseite der Libelle unterhalb der Oberseite des Korpus der Wasserwaage angeordnet ist, um die Libelle gegen Zerkratzen zu schützen.

In Weiterbildung der Erfindung weist die Wasserwaagenhalterung einen rinnenförmigen Abschnitt zum abschnittsweisen Aufnehmen eines Korpus der Wasserwaage auf.

Mittels eines rinnenförmigen Abschnitts kann die Wasserwaage spielfrei und gegen Verkippen geschützt an der Wasserwaagenhalterung fixiert werden.

In Weiterbildung der Erfindung ist der Rastarm als Verlängerung einer Seitenwand des rinnenförmigen Abschnitts ausgebildet.

In Weiterbildung der Erfindung weist die Wasserwaagenhalterung wenigstens eine weitere Fixiermöglichkeit für Zusatzeinrichtungen auf.

Solche Zusatzeinrichtungen können beispielsweise Laser-Entfernungsmesser, gegebenenfalls eine weitere Wasserwaage, oder auch Ablagen zum Ablegen von Kleinteilen sein. Selbstverständlich kann an dem Wasserwaagenhalter auch eine Stifthalterung vorgesehen sein, um einen Markierungsstift stets greifbar zu haben. Die Fixiermöglichkeit kann in sehr einfacher Weise, beispielsweise mittels Bändern, mittels Magneten, mittels Rasthaken oder dergleichen ausgebildet sein.

In Weiterbildung der Erfindung ist die Fixiermöglichkeit zum Anordnen eines Laser-Entfernungsmessers und/oder eines Meterstabs ausgebildet.

Auf diese Weise kann ein Abstand der Wasserwaagenhalterung seitlich zu einer weiteren Wand, zur Decke und/oder zur Bodenfläche bestimmt werden. Beispielsweise dann, wenn Bilder in einer vordefinierten Höhe aufgehängt werden sollen, kann mit dem Meterstab ein Abstand zur Bodenfläche oder zur Decke gemessen werden, wobei der Meterstab an der Wasserwaagenhalterung befestigt ist, idealerweise in Längsrichtung verschiebbar an der Wasserwaagenhalterung befestigt ist.

Beispielsweise kann die Fixiermöglichkeit auch zum Befestigen eines Smartphones ausgebildet sein. Moderne Smartphones haben in der Regel Neigungssensoren und damit Nivelliereinrichtungen, und Abstandssensoren.

In Weiterbildung der Erfindung weist die Fixiermöglichkeit eine Nut mit T-artigem Querschnitt auf, die an mindestens einer Seite offen ist.

In eine solche Nut mit T-artigem Querschnitt kann ein passendes Gegenstück eingeschoben werden, an dem dann beispielsweise ein Laser-Entfernungsmesser befestigt ist. Alternativ kann im Rahmen der Erfindung die Fixiermöglichkeit als Gewinde, als Bajonett, als Haken für elastische Bänder, als Schlaufe eines Bands oder dergleichen ausgebildet sein.

In Weiterbildung der Erfindung ist die Wasserwaagenhalterung mittels Kunststoffspritzguss hergestellt.

Kunststoffspritzguss erlaubt das Herstellen der Wasserwaagenhalterung mit geringen Toleranzen, zu niedrigen Kosten und in großen Stückzahlen.

Die der Erfindung zugrunde liegende Aufgabe wird auch durch ein Verfahren zum Ausrichten eines Gegenstands, insbesondere eines Bilds, an einer Wand mit folgenden Schritten gelöst: Anordnen einer Wasserwaage in einer Wasserwaagenhalterung, so dass eine Oberseite der Wasserwaage vollständig freiliegt, Abstützen der Wasserwaagenhalterung auf einer Bodenfläche mittels einer Abstützung und Aufsetzen des auszurichtenden Gegenstands auf die Oberseite der Wasserwaage.

Der auszurichtende Gegenstand, insbesondere ein Bild, ist durch Aufsetzen auf die Oberseite der Wasserwaage gegen Herunterfallen oder Abrutschen gesichert und kann beispielsweise dennoch seitlich verschoben werden, um die gewünschte Position zu erreichen. Die Wasserwaagenhalterung mit der Wasserwaage ist auf einer Bodenfläche abgestützt. Ein Bediener kann den Gegenstand dadurch in der auf der Wasserwaage abgestützten Position problemlos mit einer Hand halten und gegebenenfalls noch in die gewünschte Position verschieben und mit der anderen Hand mit einem Markierungsstift Markierungen an der Wand setzen, wo Befestigungsmittel angeordnet werden sollen. Gegebenenfalls kann der Bediener auch mit einer Hand den abgestützten Gegenstand halten und mit der anderen Hand Bohrungen in der Wand setzen.

In Weiterbildung der Erfindung ist das Abstützen der Wasserwaagenhalterung mittels einer mit der Wasserwaagenhalterung verbundenen und als Teleskopstange ausgebildeten Abstützung vorgesehen.

Mittels einer Teleskopstange, insbesondere einer handelsüblichen Teleskopstange, insbesondere aus dem Malerbedarf, kann die Wasserwaagenhalterung in der Höhe verstellbar und gleichzeitig stabil abgestützt werden.

In Weiterbildung der Erfindung sind die Wasserwaagenhalterung und die Abstützung Bestandteil einer erfindungsgemäßen Vorrichtung.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine abschnittsweise Vorderansicht einer erfindungsgemäßen Vorrichtung,
- Fig. 2: eine Seitenansicht der Vorrichtung der Fig. 1,
- Fig. 3: eine Ansicht der Vorrichtung der Fig. 1 von schräg oben,
- Fig. 4: eine Darstellung der Vorrichtung der Fig. 1 mit eingesetzter Wasserwaage und an der Wasserwaagenhalterung befestigtem Laser-Entfernungsmesser und
- Fig. 5: eine abschnittsweise geschnittene Darstellung der Vorrichtung der Fig. 1 mit eingesetzter Wasserwaage und auf die Wasserwaage aufgesetztem Gegenstand.

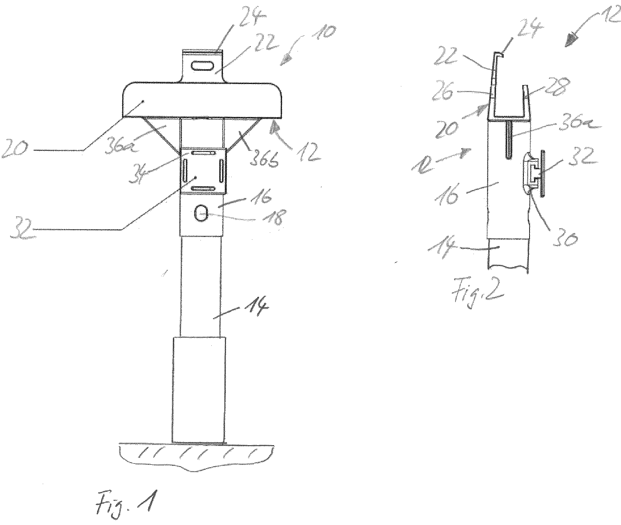

Fig. 1 zeigt eine Vorrichtung 10 zum Ausrichten eines nicht dargestellten Gegenstands, beispielsweise eines Bilds, an einer Wand. Die Vorrichtung 10 weist eine Wasserwaagenhalterung 12 und eine lediglich schematisch dargestellte Abstützung 14 auf, die stabförmig ausgebildet ist und insbesondere eine handelsübliche Teleskopstange ist, wie sie beispielsweise von Malern verwendet wird, um mit einer vorne auf die Teleskopstange aufgesteckten Walze eine Zimmerdecke oder hohe Wand mit Farbe zu versehen.

Die Abstützung 14 weist ein in Fig. 1 nicht erkennbares zapfenartiges Ende auf, das in eine rohrförmige Aufnahme 16 der Wasserwaagenhalterung 12 eingesteckt ist. Die Schnittstelle zwischen Abstützung 14 und der rohrförmigen Aufnahme 16 ist dabei in üblicher Weise ausgebildet und beispielsweise für handelsübliche Teleskopstangen ausgebildet, indem das zapfenartige Ende sich leicht konisch verjüngt und an seinem Außenumfang mit in Längsrichtung verlaufenden Nuten versehen ist. Die rohrförmige Aufnahme 16 ist ebenfalls leicht konisch ausgebildet und weist zu den Nuten der Abstützung passende, in Längsrichtung verlaufende leistenartige Vorsprünge auf. Durch einfaches Aufstecken der Wasserwaagenhalterung 12 auf die Abstützung 14 ist dadurch die Wasserwaagenhalterung 12 in Längsrichtung und auch gegenüber einer Drehung um die Längsachse der Abstützung 14 an der Abstützung 14 gesichert.

Eine Durchgangsöffnung 18 in der rohrförmigen Aufnahme der Wasserwaagenhalterung 12 kann beispielsweise noch dazu verwendet werden, eine Klemmschraube einzusetzen, oder es kann an dem zapfenartigen Ende der Abstützung 14 ein federbelasteter Knopf vorgesehen sein, der nach dem Einschieben des zapfenartigen Endes der Abstützung 14 in die rohrförmige Aufnahme 16 bewegt wird, wenn er fluchtend zu der Durchgangsöffnung 18 angeordnet ist. Die Wasserwaagenhalterung 12 kann dadurch unverlierbar an der Abstützung 14 angeordnet werden.

Die Wasserwaagenhalterung 12 weist einen an die rohrförmige Aufnahme 16 angesetzten rinnenförmigen Abschnitt 20 auf, der, siehe auch Fig. 2, an die Außenabmessungen einer handelsüblichen Wasserwaage angepasst ist. Die rinnenförmige Aufnahme 20 verläuft senkrecht zur rohrförmigen Aufnahme 16 und damit auch zur Abstützung 14. Die Wasserwaage wird in den rinnenförmigen Abschnitt 20 eingesetzt und ist dadurch in Richtungen nach vorne und hinten sowie nach unten fixiert. In Fig. 1 sind dies die Richtungen in die Zeichenebene hinein, aus der Zeichenebene heraus und nach unten.

Von einer in Fig. 1 verdeckten hinteren Seitenwand der rinnenförmigen Aufnahme 20 geht ein Rastarm 22 aus, der sich von der Oberkante der Seitenwand der rinnenförmigen Aufnahme 20 aus nach oben erstreckt. An dem in Fig. 1 oberen Ende des Rastarms 20 ist eine Rastnase 24 angeordnet, die sich, vgl. Fig. 2, in Richtung auf die in Fig. 1 vordere Vorderwand erstreckt.

In Fig. 2 ist die rinnenförmige Aufnahme 20 mit der hinteren Seitenwand 26, die in Fig. 2 links angeordnet ist, und einer vorderen Seitenwand 28 zu erkennen, die in Fig. 2 rechts angeordnet ist. Der Rastarm 22 geht, wie ausgeführt wurde, von der Oberkante der hinteren Seitenwand 26 aus und die Rastnase 24 am freien, in Fig. 1 und Fig. 2 oberen Ende des Rastarms 22 erstreckt sich in Richtung auf den Innenraum der rinnenförmigen Aufnahme, mit anderen Worten in Richtung auf die in Fig. 2 rechts angeordnete vordere Seitenwand 28.

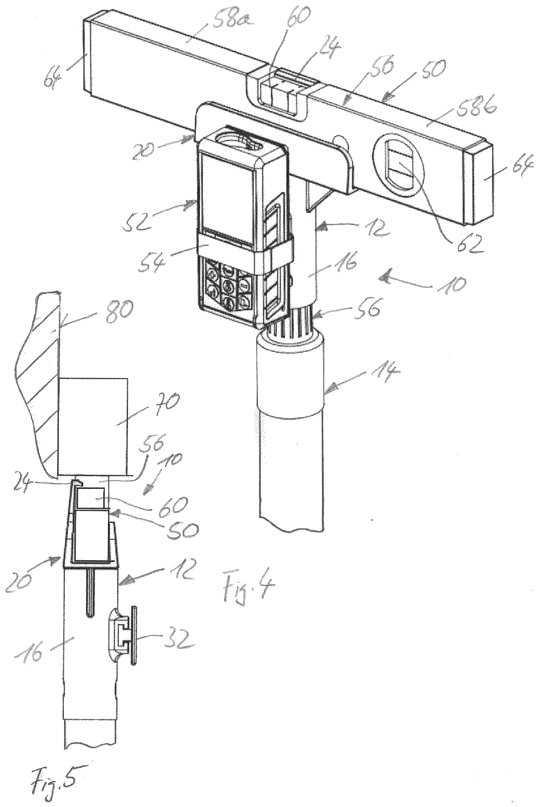

Die Rastnase 24 ist dafür vorgesehen, im montierten Zustand auf der Oberseite einer Libelle einer in der rinnenförmigen Aufnahme 20 angeordneten Wasserwaage aufzuliegen, vgl. Fig. 4 und Fig. 5.

Die Wasserwaage ist dadurch sicher in der rinnenförmigen Aufnahme 20 gehalten und mittels der Rastnase 24 auch gegenüber einem Verkippen sowie gegenüber einer Bewegung in Fig. 1 nach oben gesichert. Die Rastnase 24 ist dabei so ausgebildet, dass die Oberseite des Korpus der Wasserwaage freibleibt. Dies ergibt sich dadurch, dass bei üblichen Wasserwaagen die für die horizontale Ausrichtung vorgesehene Libelle, vgl. Fig. 4 und Fig. 5, gegenüber der Oberseite des Korpus der Wasserwaage leicht nach unten versetzt ist, um zu verhindern, dass die Oberseite der Libelle beim Anlegen der Wasserwaage an eine Oberfläche eines Gegenstands verkratzt.

An der Wasserwaagenhalterung 12 ist im Bereich der rohrförmigen Aufnahme eine Fixiermöglichkeit 30 in Form einer Nut mit T-förmigem Querschnitt vorgesehen. Die Nut ist zu beiden Seiten hin offen. In den Fig. 1 und 2 ist in diese Nut eine Halterung 32 eingeführt, die zum einen ein in die Nut passendes Gegenstück und zum anderen eine Halterungsplatte 34 mit mehreren Schlitzen zum Durchführen von Haltebändern aufweist. Durch die Fixiermöglichkeit 30 und die Halterung 32 kann beispielsweise ein Laser-Entfernungsmesser, siehe Fig. 4, oder auch ein Smartphone an der Wasserwaagenhalterung 12 befestigt werden. Beispielsweise kann eine Abstandsmessfunktion des Laser-Entfernungsmessers oder des Smartphones genutzt werden und auch der Neigungsmesser eines Smartphones kann genutzt werden, um sicherzustellen, dass die rohrförmige Aufnahme 16 und die Abstützung 14 exakt senkrecht zu einer Bodenfläche ausgerichtet sind. Beispielsweise kann das Smartphone auch dazu benutzt werden, um eine Skizze für die Montage des Gegenstands darzustellen oder um Notizen im Blickbereich zu haben, beispielsweise in welcher Höhe ein Gegenstand an einer Wand ausgerichtet und befestigt werden soll.

Die Wasserwaagenhalterung 12 ist als einstückiges Kunststoffspritzgussteil ausgebildet.

In Fig. 1 und Fig. 2 sind zwei jeweils dreieckförmige Abstützungen 36a, 36b zu erkennen, die eine Unterseite des rinnenförmigen Abschnitts 20 mit der rohrförmigen Aufnahme 16 verbinden. Die Versteifungen 36a, 36b sind jeweils plattenartig ausgebildet und sorgen für eine äußerst stabile Anbindung des rinnenförmigen Abschnitts 20 an die rohrförmige Aufnahme 16.

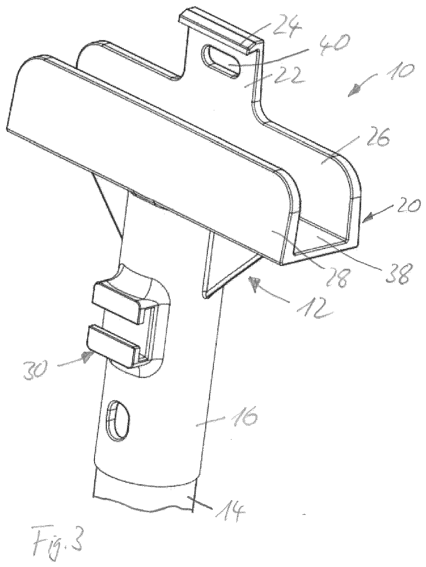

Fig. 3 zeigt die Vorrichtung 10 der Fig. 1 und 2 abschnittsweise in einer Ansicht von schräg oben. Die Abstützung 14 in Form einer handelsüblichen Teleskopstange ist wieder nur abschnittsweise dargestellt. Die Wasserwaagenhalterung 12 ist ohne die Halterung 32 dargestellt, so dass die Fixiermöglichkeit 30 mit der zu beiden Seiten hin offenen Nut mit T-förmigem Querschnitt gut zu erkennen ist. Eine Längsrichtung der Nut verläuft exakt senkrecht zu einer Längsachse des rohrförmigen Abschnitts 16 der Wasserwaagenhalterung 12. Im Bereich des rinnenförmigen Abschnitts 20 sind die vordere Seitenwand 28, ein Boden 38 des rinnenförmigen Abschnitts 20 und die hintere Seitenwand 26 zu erkennen. Der Rastarm 22 geht von einer Oberseite der hinteren Seitenwand 26 aus und ist einstückig mit der hinteren Seitenwand 26 ausgeformt. Die Rastnase 24 ist einstückig mit dem Rastarm 22 ausgebildet und erstreckt sich, wie bereits ausgeführt wurde, vom Rastarm 22 aus in Richtung auf die vordere Seitenwand 28. Der Rastarm 22 ist mit einer ovalen Durchgangsöffnung 40 versehen. Die ovale Durchgangsöffnung 40 verringert die Steifigkeit des Rastarms 22, so dass dieser beim Einschieben einer Wasserwaage in den rinnenförmigen Abschnitt 20 leicht nach hinten, in Fig. 3 also in einer Richtung von der vorderen Seitenwand 28 weg, gebogen werden kann. Die Wasserwaage wird dann in den rinnenförmigen Abschnitt 20 eingeschoben, bis eine Unterseite des Korpus der Wasserwaage auf dem Boden 38 des rinnenförmigen Abschnitts 20 aufliegt und die Rastnase 24 über die Oberseite der Libelle der Wasserwaage schnappt.

Fig. 4 zeigt die Vorrichtung 10 der Fig. 1 bis 3 mit der Wasserwaagenhalterung 12, in die eine Wasserwaage 50 eingesetzt ist, und mit einem Laser-Entfernungsmesser 52, der an der Halterung 32 mittels eines Spannbands 54 befestigt ist. Die Abstützung 14 ist lediglich abschnittsweise dargestellt, es ist aber die Ausbildung des oberen Endes der als Teleskopstange ausgebildeten Abstützung 14 zu erkennen. Wie ausgeführt wurde, hat das obere, zapfenartige Ende 56 der Teleskopstange in Längsrichtung verlaufende Nuten, die in passende leistenartige Vorsprünge in der rohrförmigen Aufnahme 16 der Wasserwaagenhalterung 12 eingreifen können.

Die Wasserwaage 50 weist einen Korpus 56 auf, der in üblicher Weise leistenförmig mit rechteckigem Querschnitt ausgebildet ist. Die Oberseite des Korpus 56 ist durch zwei Anlageflächen 58a, 58b gebildet, die fluchtend zueinander angeordnet sind und die durch die Libelle 60 voneinander getrennt sind. Es ist in Fig. 4 gut zu erkennen, dass eine Oberseite der Libelle 60 gegenüber den Anlageflächen 58a, 58b der Oberseite des Korpus 56 der Wasserwaage 50 zurückgesetzt ist. Wenn die Wasserwaage auf den Anlageflächen 58a, 58b abgelegt wird oder mit den Anlageflächen 58a, 58b an einen Gegenstand angelegt wird, wird dadurch verhindert, dass die Oberseite der Libelle 60 verkratzt.

In Fig. 4 ist zu erkennen, dass die Rastnase 24 der Wasserwaagenhalterung 12 über die Oberseite der Libelle 60 geschnappt ist und dadurch an der Oberseite der Libelle angreift und die Wasserwaage 50 unverrückbar in der rinnenförmigen Aufnahme 20 fixiert. Die Wasserwaage 50 kann in der fixierten Position der Fig. 4 nicht nach oben, aus der rinnenförmigen Aufnahme heraus, nicht nach unten und auch nicht nach rechts oder links bewegt werden. Um die Wasserwaage 50 aus der rinnenförmigen Aufnahme 20 herauszunehmen, muss zunächst die Rastnase 24 in Fig. 4 nach hinten gedrückt werden, bis sie von der Oberseite der Libelle 60 freikommt und dann nach oben aus der rinnenförmigen Aufnahme herausgenommen werden kann.

Die Wasserwaage 50 weist in ihrem Korpus 56 noch in üblicher Weise eine zweite Libelle 62 auf. An den Stirnseiten des Korpus 56 sind Schutzkappen 64 vorgesehen.

In Fig. 4 ist ein Laser-Entfernungsmesser 52 an der Wasserwaagenhalterung 12 befestigt. Dieser Laser-Entfernungsmesser 52 kann beispielsweise dazu benutzt werden, einen Abstand zu einer in Fig. 4 nicht dargestellten, unten liegenden Bodenfläche zu messen oder auch um beispielsweise einen Abstand zu einer in Fig. 4 ebenfalls nicht dargestellten links oder rechts angeordneten seitlichen Wand zu messen. Hierzu kann die Halterung 32, siehe Fig. 1, Fig. 2 und Fig. 5, beispielsweise seitlich aus der hinterschnittenen Nut am rohrförmigen Abschnitt 16 herausgezogen werden und um 90° nach links oder rechts verdreht wieder in die Nut eingeschoben zu werden.

Anhand der Fig. 5, die eine abschnittsweise geschnittene Darstellung der Vorrichtung 10 zeigt, ist zu erkennen, wie die Rastnase 24 im montierten Zustand der Wasserwaage 50 auf der Oberseite der Libelle 60 aufliegt. Es ist weiter zu erkennen, wobei die Darstellung der Fig. 5 zur Verdeutlichung übertrieben dargestellt ist, dass die Oberseite der Libelle 60 gegenüber der Oberseite des Korpus 56 nach unten versetzt ist. Die Wasserwaage 50 ist infolgedessen sicher in der rinnenförmigen Aufnahme 20 der Wasserwaagenhalterung 12 fixiert und dennoch kann ein auszurichtender Gegenstand, beispielsweise ein in Fig. 5 schematisch dargestelltes Bild 70, auf die Oberseite des Korpus 56 der Wasserwaage 50 aufgelegt werden.

Fig. 5 zeigt schematisch das Bild 70, das relativ zu einer Wand 80 ausgerichtet und gegebenenfalls an der Wand 80 befestigt werden soll. Hierzu wird das Bild 70, allgemein ein Gegenstand, mit seiner Unterseite auf die Anlageflächen 58a, 58b der Oberseite des Korpus 56 der Wasserwaage 50 aufgesetzt. Die Unterseite des Bilds 70 kommt dann, siehe Fig. 4, auf den Anlageflächen 58a, 58b des Korpus 56 der Wasserwaage 5 zu liegen, wie dies in Fig. 5 dargestellt ist. Die Abstützung 14 wird zuvor oder bereits mit dem aufgesetzten Bild 70 in ihrer Höhe verstellt, bis eine gewünschte Höhe des Bilds 70, mit anderen Worten ein gewünschter Abstand der Unterseite des Bilds 70, von einer nicht dargestellten Bodenfläche erreicht ist. Die Abstützung 14 mit der darauf angeordneten Wasserwaagenhalterung 12 wird dann, während das Bild 70 weiter an der Wand 80 anliegt, so ausgerichtet, dass die Unterseite des Bilds 70 und somit der Korpus 56 der Wasserwaage 50 exakt horizontal ausgerichtet ist. Dies kann in üblicher Weise mit der Libelle 60 der Wasserwaage 50 überprüft werden. Ist die gewünschte Ausrichtung des Bilds 70 an der Wand 80 erreicht, kann das Bild mit einer Hand in der erreichten Position gehalten werden, indem es gegen die Wand gedrückt wird, und es können mit einem Markierungsstift Markierungen an der Wand 80 angebracht werden, um später an diesen Markierungen Nägel einzuschlagen oder Bohrlöcher zu setzen, oder es können auch gleich Bohrungen in der Wand 80 gesetzt oder Nägel eingeschlagen werden.

Der wesentliche Vorteil der erfindungsgemäßen Halterung 10 ist dabei, dass eine Person alleine das Bild 70 relativ zur Wand 80 ausrichten und Markierungen an der Wand anbringen oder Bohrungen in der Wand setzen kann. Da das Bild 70, oder ein Gegenstand, mit seiner Unterseite auf der Oberseite der Wasserwaage 50 aufliegt und die Vorrichtung 10 nach unten, gegen ein Bodenfläche abgestützt ist, kann in einem ersten Schritt, der auch vor Aufsetzen des Bilds 70 erfolgen kann, eine gewünschte Höhe der Oberseite der Wasserwaage 50 mittels Verstellen der Teleskopstange eingestellt werden. Das Ausrichten der Wasserwaage in die exakt horizontale Lage kann danach erfolgen. Das Halten des Bilds 70 an der Wand 80 in der erzielten, gewünschten Position ist dann problemlos mit einer Hand möglich. Die andere Hand des Bedieners steht zur Verfügung, um mit einem Markierungsstift Markierungen an der Wand 80 anzubringen oder gleich Bohrlöcher in die Wand 80 einzubringen.

Zweckmäßigerweise ist an der Wasserwaagenhalterung 10 noch eine nicht dargestellte Halterung für einen Markierungsstift vorgesehen, so dass dieser nach dem Ausrichten des Bilds 70 sofort zur Hand ist.

## Patentansprüche

1. Vorrichtung zum Ausrichten eines Gegenstandes, insbesondere eines Bildes, an einer Wand, **gekennzeichnet durch** eine Wasserwaagenhalterung zum Fixieren einer Wasserwaage, so dass eine Oberseite der Wasserwaage zum Auflegen des Gegenstandes vollständig freiliegt, und einer in der Länge verstellbaren Abstützung für die Wasserwaagenhalterung, wobei die Abstützung zum Abstützen der Wasserwaagenhalterung auf einer Bodenfläche ausgebildet ist.

2. Vorrichtung nach Anspruch 1, **dadurch gekennzeichnet, dass** die Abstützung als Teleskopstange ausgebildet ist.

3. Vorrichtung nach Anspruch 1 oder 2, **dadurch gekennzeichnet, dass** die Wasserwaagenhalterung eine rohrförmige Aufnahme zum Aufnehmen eines Endes der Abstützung hat und dass die Abstützung ein zapfenartiges Ende zum Einstecken in die rohrförmige Aufnahme aufweist

4. Vorrichtung nach wenigstens einem der vorstehenden Ansprüche, **dadurch gekennzeichnet, dass** die Wasserwagenhalterung wenigstens einen Rastarm, insbesondere zum abschnittsweisen Umgreifen der Wasserwaage, aufweist.

5. Vorrichtung nach Anspruch 4, **dadurch gekennzeichnet, dass** der Rastarm, an seinem freien Ende wenigstens eine Rastnase aufweist, die im montierten Zustand der Wasserwaage auf der Oberseite einer Libelle der Wasserwaage zu liegen kommt.

6. Vorrichtung nach wenigstens einem der vorstehenden Ansprüche, **dadurch gekennzeichnet, dass** die Wasserwagenhalterung einen rinnenförmigen Abschnitt zum abschnittsweisen Aufnehmen eines Korpus der Wasserwaage aufweist.

7. Vorrichtung nach Anspruch 4, 5 und 6, **dadurch gekennzeichnet, dass** der Rastarm als Verlängerung einer Seitenwand des rinnenförmigen Abschnitts ausgebildet ist.

8. Vorrichtung nach wenigsten einem der vorstehenden Ansprüche, **dadurch gekennzeichnet, dass** die Wasserwaagenhalterung wenigstens eine Fixiermöglichkeit für Zusatzeinrichtungen aufweist.

9. Vorrichtung nach Anspruch 8, **dadurch gekennzeichnet, dass** die Fixiermöglichkeit zum Anordnen eines Laser-Entfernungsmessers und/oder eines Meterstabs ausgebildet ist.

10. Vorrichtung nach Anspruch 8 oder 9, **dadurch gekennzeichnet, dass** die Fixiermöglichkeit eine Nut mit T-artigem Querschnitt aufweist, die an mindestens einer Seite offen ist.

11. Vorrichtung nach wenigstens einem der vorstehenden Ansprüche, **dadurch gekennzeichnet, dass** die Wasserwaagenhalterung mittels Kunststoffspritzguss hergestellt ist.

12. Verfahren zum Ausrichten eines Gegenstandes, insbesondere eines Bildes, an einer Wand, mit folgenden Schritten: Anordnen einer Wasserwaage in einer Wasserwaagenhalterung, so dass eine Oberseite der Wasserwaage vollständig frei liegt, Abstützen der Wasserwaagenhalterung auf einer Bodenfläche mittels einer Abstützung, und Aufsetzen des auszurichtenden Gegenstandes auf die Oberseite der Wasserwaage.

13. Verfahren nach Anspruch 12, **gekennzeichnet durch** Abstützen der Wasserwagenhalterung mittels einer mit der Wasserwaagenhalterung verbundenen und als Teleskopstange ausgebildeten Abstützung.

14. Verfahren nach Anspruch 12 oder 13, **dadurch gekennzeichnet, dass** die Wasserwaagenhalterung und die Abstützung Bestandteil einer Vorrichtung nach einem der vorstehenden Ansprüche 1 bis 11 sind.
